# EUROPEAN PATENT SPECIFICATION

(11) **EP 3 609 584 B1**
(45) Date of publication and mention of the grant of the patent: **14.01.2026**
(21) Application number: 18721700.5
(22) Date of filing: 12.04.2018
(51) Int. Cl.: A62C 2/06, A62C 3/06, A62C 3/16, F16L 5/04, F16L 57/04, H02G 3/04, H02G 3/22

(54) **USE OF A SLEEVE OR SHELL FOR AROUND A PIPE IN A CONDUIT AS AT LEAST PART OF A PASSIVE FIRE-RESISTANT SEALING SYSTEM**
VERWENDUNG EINER HÜLSE ODER EINER SCHALE UM EIN ROHR IN EINEM LEITUNGSKANAL ALS MINDESTENS TEIL EINES PASSIVEN FEUERBESTÄNDIGEN DICHTUNGSSYSTEMS
UTILISATION D'UN MANCHON OU D'UNE COQUE AUTOUR D'UN TUYAU DANS UN CONDUIT COMME AU MOINS UNE PARTIE D'UN SYSTÈME D'ÉTANCHÉITÉ PASSIF RÉSISTANT AU FEU

(30) Priority: 12.04.2017 DE 102017107904
(43) Date of publication of application: 19.02.2020
(60) Divisional application: 25211127.3
(73) Proprietor: Beele Engineering B.V., 7122 NZ Aalten (NL)
(72) Inventor: TÖPFER, Oliver, 7122 NT Aalten (NL); SOMMER, Burkhard, 59909 Bestwig (DE)
(74) Representative: van Bouwelen, Franciscus Maria
(86) International application number: PCT/EP2018/059406
(87) International publication number: WO 2018/189303

(56) References cited:
- EP-A1- 0 432 714
- WO-A1-2016/012768
- DE-A1- 3 206 218
- US-A- 6 054 088
- US-A1- 2007 059 468
- US-A1- 2014 112 861
- US-A1- 2014 154 444
- US-A1- 2014 209 332

## Description

The present disclosure relates to a presently not obtained protective container for holding ignition-sensitive objects consisting of a base, side walls and, if so required, an upper closing wall, the base being reinforced in order to improve the carrying capacity. The present disclosure also relates to a protective sleeve, shell or block having at least a first side and a second side for preventing heat at the first side from being transferred to the second side. The invention is related to a use of a sleeve, shell or block for respectively around a pipe, an ignition-sensitive object, around a conduit, as at least a part of a passive fire-resistant sealing system or heat insulation.

The transportation of inflammable and combustible substances is subject to special regulations. Batteries for electric vehicles and tools are among the objects which are considered to be highly inflammable and are classified as hazardous goods according to the international transportation law. Lithium batteries in particular are subject to the hazardous materials regulations due to the risk of decomposition within the individual cell and complex burning and explosion behavior if damaged, e.g. in the event of a lithium ion battery incident, highly toxic HF is also released in gaseous form. Therefore, special regulations are to be observed for the commercial dispatch and transportation of lithium-ion batteries.

It is therefore necessary for the packages used for transportation to completely enclose the batteries, and for the batteries to be protected against short circuit. Another requirement is to protect the batteries against unintentional movement. The batteries should also be packaged or protected so that contact with conductive materials within the same packaging cannot lead to a short circuit.

When transporting inflammable and combustible substances it is desirable to arrange the transportation such that these goods are packaged so that the heat or flames that form under certain circumstances can already be checked or fully suppressed within the packaging so that no damage occurs outside of the packaging of these goods due to excessive heat or flames. In addition, any liquids passing out of the packaging material should be collected and any gases passing out of the packaging material should be adsorbed.

Therefore, the object underlying the present disclosure is to make available a presently not claimed container in which inflammable or combustible goods can be packaged and transported, and in the event of combustion or ignition of these goods being transported, the surrounding area being shielded so that there is no damage to the surrounding area.

Accordingly, an object of the present disclosure is a presently not claimed protective container for holding ignition-sensitive objects consisting of a base, side walls and optionally also an upper closing wall, the base being reinforced in order to improve the carrying capacity, characterized in that the base comprises at least
- a vermiculite plate, the upper side of which faces the container interior,
- a supporting structure that reinforces the plate from below.

The protective container may also be referred to as a protective shell.

With the protective container according to the disclosure it is possible to safely transport ignition-sensitive objects. The vermiculite material of the base is a plate made of expanded vermiculite so that this plate prevents sparks which occur during a possible self-igniting process, or also flames, from passing out of the container and causing damage in the surrounding area. The supporting structure which reinforces the plate from below serves to improve the carrying capacity so that heavy objects and loads, e.g. batteries, can also be transported.

The base of the protective container according to the disclosure is a plate made of expanded vermiculite. Molds made of expanded vermiculite are known from the prior art. They are produced by a pressing process, water glass being used as the binding agent. Additional substances may also be contained, in particular those which have fire-retardant properties, also referred to as flame retardants or fire retardants in general language usage, and also absorptive properties with respect to liquids and gases that pass out and can bind and neutralize the latter.

The other walls of the container, in particular the side walls, are preferably also produced from a fire-retardant material, preferably also from expanded vermiculite. The upper closing wall can also be made of a different material, and can optionally also have a different structure, preferably however, the upper closing wall also having fire-retardant properties, and particularly preferably being made of a vermiculite-based material.

The supporting structure which reinforces the plate from below is preferably a metal grate, a surface structure made of glass fiber-reinforced plastic or a surface structure with carbon fiber-reinforced plastic. The supporting structure preferably extends horizontally, at least over the majority of the base area of the plate. Is has proven to be particularly preferred if the supporting structure is embedded into the material of the plate as reinforcement. This reinforcement can be incorporated into or be embedded in the material of the plates in a known manner during the production process for the plate made of expanded vermiculite. If the supporting structure is a metal grate, in an alternative example the plate can sit on the metal grate.

In one possible example of the present disclosure the supporting structure is provided on its outer edges with connection elements which serve to connect the base to the side walls. These connection elements can be, for example, straps formed on the supporting structure and protruding outwardly.

The protective container according to the disclosure also has, in addition to the base, side walls. These side walls are preferably in the form of side plates which are also made of expanded vermiculite material. The side plates can also have a reinforcing supporting structure to improve their strength. Generally, the thickness of the side plates is somewhat less than the thickness of the base. If a reinforcing supporting structure is incorporated into the side walls or adjoins the side walls, this supporting structure may have smaller dimensions than the supporting structure in the base.

The upper cover of the protective container can, for example, be formed in the same way as the side plates. In one possible example the upper cover is formed by a surface element sub-divided like cassettes, as described below as a protective element, or by some other flexible material which is suitable as a cover.

In one particularly preferred example the protective container according to the present disclosure has fire-active protective elements on one or more of the insides of the side walls facing the interior of the container and optionally of the base. This protective element is preferably a surface element sub-divided like cassettes, a fire-retardant material being located in each of the individual cassettes. The fire-retardant material which is contained in the protective element is preferably a fire-retardant filler, in particular raw vermiculite, expanded graphite, an intumescent system or a combination of the above components, possibly also in combination with additional components. This protective element has additional fire-retardant properties.

If ignition or a fire occurs within the container, at high temperatures the raw vermiculite releases crystallization water and the volume of the raw vermiculite increases considerably, i.e. so-called expanded vermiculite forms. Due to the increase in volume the burning goods are enveloped by fire-protection material, and the fire-protection capacity of the container is further improved overall.

In its filling the protective element may contain up to 100 % raw vermiculite, preferably 20 to 80 % by weight in relation to the overall weight of the material contained in the surface element is raw vermiculite, and particularly preferably 40 to 60 % by weight. The raw vermiculite may have a grain size of 0, 1, 2, 3 or 4, grain sizes of 0, 1, 2 or 3 being preferred, and in particular the grain sizes 2 or 3 or mixtures thereof being used.

If a mixture of raw vermiculite and expanded vermiculite is contained in the protective element, the expanded vermiculite is preferably contained in an amount of up to 60 % by weight, particularly preferably in an amount of 5 to 50 % by weight, and in particular in an amount of 10 to 40 % by weight in relation to the amount of material that is contained. The expanded vermiculite preferably has a grain size of 0, 1, 2, 3 or 4, grain sizes of 0, 1, 2 or 3 are preferred, and grain sizes of 2 or 3 or mixtures thereof are particularly preferred.

The siliceous structure of the expanded vermiculite or raw vermiculite contributes to the binding and neutralization of liquids and gases passing out of the burning stored object. Since raw vermiculite expands when there is rapid heat propagation and so the volume of the protective element increases, rapid enclosure of the object can take place, and this may contribute to the source of fire being quenched.

Ceramization agents and propellants may be contained in the protective element as additional components. Appropriate ceramization agents are, for example, substances containing phosphor, such as phosphates, phosphinates, red phosphor, for example bonded in a PE masterbatch, phosphoric acid derivatives, as well as structures containing silicon, such as silicates, silanes and siloxanes or borate glass. The ceramization agent can be contained in an amount of up to 25 % by weight in relation to the overall weight of the material contained in the protective element, in particular in an amount of 5 to 20 % by weight, and in particular of 8 to 15 % by weight. If the raw vermiculite expands, the ceramization agent may generate solidification of the free-flowing material contained in the protective element, and so bring about enclosure of the stored object.

The propellant may be any propellant, and may be selected, for example, from substances containing nitrogen, such as melamines, cyanurates, melamine cyanurates, melamine polyphosphates (MPP) or ammonium-based substances (APP). The propellant may bring about a further increase in volume, in particular when only small amounts of raw vermiculite are contained therein. The propellant may be contained in an amount of up to 15 % by weight, preferably from 3 to 10 % by weight, and particularly preferably in an amount of from 5 to 8 % by weight in relation to the overall weight of the material contained in the protective element.

If the protective element is in the form of a surface element sub-divided like cassettes, the basic structure of the surface element is preferably a textile surface material composed of two material layers which are connected to one another to form the cassettes along seam sections. The seams may be adhesive seams or sewn seams. The fire-retardant material is located between the seam sections.

In one possible example the fire-retardant material in the protective element is in the form of free-flowing material. This type of filling offers the advantage that cushioning of the object to be stored or transported against e.g. impacts is additionally achieved.

The material from which the basic structure of the surface element is made should also be a fire-retardant material. Preferably, this is a fleece or a fabric made of a mineral fiber which is additionally permeable to gas and liquid.

The presently claimed invention is directed to the use of a protective sleeve or shell that can be used to facilitate that heat, which is due to a nearby fire, can be prevented from being easily transferred. Particularly where it is very important to ensure that a fire will not quickly spread throughout a construction, it is important to seal the remaining space in openings provided in walls, ceilings or decks for the extensions of pipe and/or cables from one compartment to another or from inside to outside and vice versa. For instance, a metal pipe that is extending from one compartment to another compartment on board of a metal construction such as a ship or an offshore oil platform will be extending through a hole in a metal wall. The remaining space in the hole needs to be sealed off such that fire cannot easily find its way through the hole. Furthermore, particularly when a metal pipe extends from one side of the wall to another side of the wall, it is important that heat transferred by the metal of the pipe, can be insulated as much as possible, so that at the side that is not exposed to a nearby fire, the temperature will for as long as possible be kept relatively low. Similarly, where many cables are transported through a conduit, for instance of the size of a house door, it is important to have materials present in the conduit in the space that is not occupied by the cables, so that these materials equally can assist in preventing heat from being transferred through the conduit, be it directly, or via the heat transferred into the conduit via the cables.

Accordingly, the presently claimed invention provides the use of a protective sleeve or shell having at least a first side and a second side for preventing heat present at the first side from being transferred to the second side, sleeve, shell or block comprising expanded vermiculite and a reinforcement structure for enhancing strength of the sleeve or shell. The reinforcement structure is a coating applied to all sides of the sleeve or shell. The coating is an inorganic coating and of a heat insulating material. For such coating materials reference is made to for instance US 2014/0112861. Preferably the coating is of a fire-retardant material. The coating exhibits at atmospheric pressure during increasing ambient temperature a drop in its thermal conductivity.

The coating has a porous structure or forms pores at elevated temperatures. Such pores comprise pores having a diameter of less than 700 nm and preferably less than 70 nm. The porous structure may comprise clusterings of particles having a size within a range of 2 - 300 nm. Preferably, the coating is salt water resistant. The coating itself may be impermeable to gas when a pressure difference of 30 mBar is set between the first and the second side. The coating is preferably also impermeable to water. Reference is made to a coating material sold by the applicant under the trade name "Fissic".

Such a sleeve or shell may be very useful in marine environments. Due to the coating, tears formed in the expanded vermiculite material, may not result in fracture of the sleeve or shell.

It is pointed out that EP 0432714 A1 describes a fire-protection arrangement to gas pipes of lead and to cable holders. A protective plate comprising vermiculite may be part of that arrangement. The protective plate may be provided with an insulating layer. It is further pointed out that US 2014/0112861 A1 discloses a heat-insulating material in which thermal conductivity is controlled not to increase and good insulation properties are held even in a high temperature range. Disclosed is a possibility to obtain a porous sintered body having a higher porosity and lower thermal conductivity, without spoiling the compressive strength.

In the attached figures possible embodiments of the present invention are illustrated. These show as follows:
- Fig. 1:: a perspective illustration of the claimed protective container;
- Fig. 2:: the protective container from Figure 1 with a protective element disposed on a side plate;
- Fig. 3:: a base plate;
- Fig. 4:: a metal grate.
- Fig: 5:: a perspective illustration of a sleeve of the present invention put around a pipe.
- Fig. 6:: Schematically a conduit 14 with protective blocks 15.

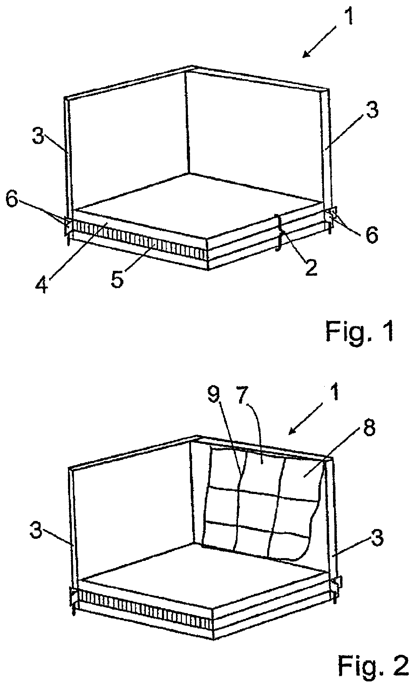

Figure 1 shows a protective container for holding ignition-sensitive objects having a base 2 and side walls 3, only two of the four possible side walls being represented in the illustration shown here. The upper closing wall is not shown here. The base 2 consists of a plate made of expanded vermiculite facing the interior of the container with its upper side and a supporting structure 5 that reinforces the plate from below. In the example shown here the supporting structure 5 is embedded in the material of the plate as reinforcement, i.e. it is enclosed from above and from below by the expanded vermiculite. In the example shown here the supporting structure extends over the majority of the base surface. On its outer edges the supporting structure 5 is provided with connection elements 6 which are configured such that the base can be connected to the side walls by these connection elements.

Figure 2 shows the protective container 1 from Figure 1, a fire-retardant protective element 7 being disposed on an inside of the side walls facing the interior of the container. In the example that is shown here, the protective element 7 that is illustrated is a surface element sub-divided like cassettes, free-flowing material made of fire-retardant material being contained in the individual cassettes which form cavities. The basic structure of this surface element 7 is formed from a textile surface material composed of two material layers which are connected to one another to form the cassettes 8 exclusively along seam sections 9. The free-flowing fire-retardant material is located between the seam sections 9. In this way the protective element 7 serves as impact protection.

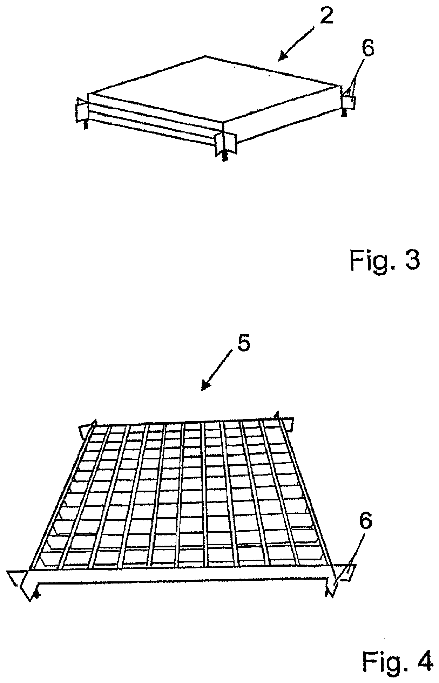

Figure 3 shows a base 2 of the protective container 1 according to the disclosure. This base 2 is preferably a plate made of vermiculite into which a supporting structure is incorporated. A possible example of a supporting structure in the form of a metal grate is shown in Figure 4. The supporting structure generally extends over the base area of the base 2 and is provided on its outer edges with connection elements 6 so that the base can be connected to the side walls in the manner of a push-together system. The upper cover (not shown here) may be configured in the same way as the side walls, but it can also be formed by the surface element 7 used as a protective element for the inner lining of the protective container 1 or by a different flexible material which is suitable as a cover.

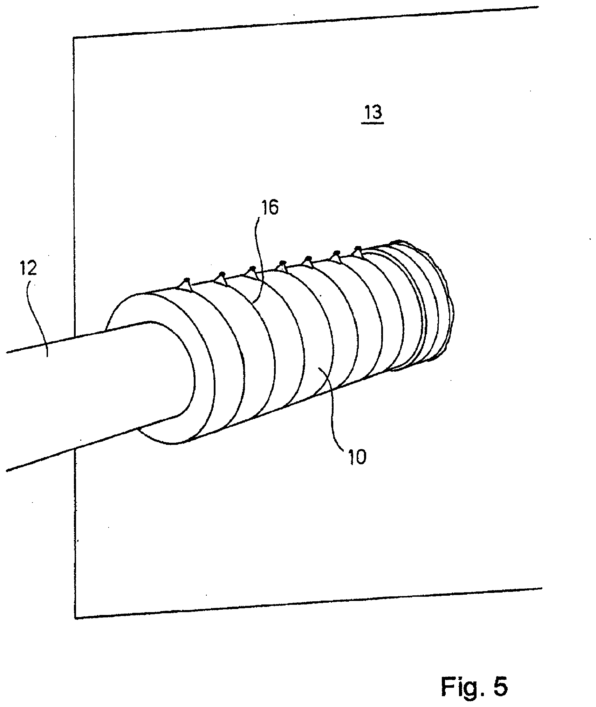

Fig. 5 shows a protective sleeve 10 having an inner side (not visible) and an outer side 11, around a metal pipe 12 which penetrates a wall 13. The sleeve may be a two-part sleeve, held together for instance by metal straps 16.

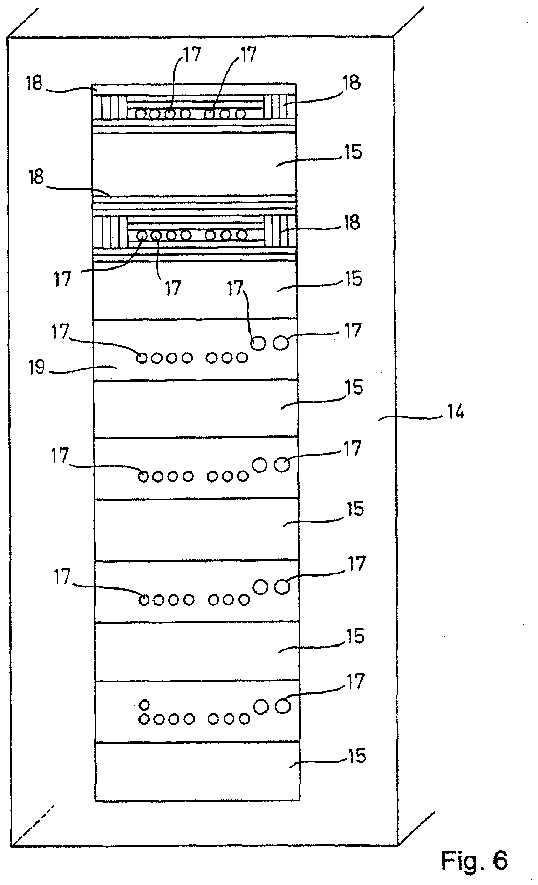

Fig. 6 shows a front view of a rectangular conduit 14 with protective blocks 15 between sections. The conduit 14 may have the size of a door for an opening through which an adult can pass.

At the top of the opening there is a section visible with cables 17 held between strip-shaped insulating foam material 18. This section is kept in place by a block 15 according to the present disclosure. Straight under the top block 15, there is another section having cables 17 and strip-shaped insulating foam material 18. Further down below, another block 15 is positioned. The remaining sections through which cables 17 extend are filled with a different sealing system, for instance a system comprising sleeves made of rubber (expandable or non-expandable) clamped in tightly between the blocks and the inner wall of the conduit so that a backing-structure is provided for the application of a sealant 19. Such sealing systems are provided by the applicant under the tradenames RISE and NOFIRNO. Clearly, sections through which cables 17 extend can in such large conduits be separated by blocks in accordance with the present disclosure.

### List of Reference Numbers

- 1: protective container
- 2: base
- 3: side walls
- 4: vermiculite plate
- 5: supporting structure
- 6: connection elements
- 7: protective element
- 8: cassette
- 9: seam section
- 10: sleeve
- 11: outer side
- 12: metal pipe
- 13: wall
- 14: conduit
- 15: protective block
- 16: metal straps
- 17: cables
- 18: insulation foam material
- 19: sealant

## Claims

1. Use of a sleeve (10) or shell for around a pipe (12) in a conduit (14) as at least part of a passive fire-resistant sealing system, wherein the sleeve or shell has at least a first side and a second side for preventing heat present at the first side from being transferred to the second side, the sleeve or shell comprising expanded vermiculite and a reinforcement structure for enhancing strength of the sleeve or shell , wherein the reinforcement structure is a coating applied to all sides of the sleeve or shell and wherein the coating is an inorganic coating of a heat insulating material, wherein the coating has a porous structure or forms pores at elevated temperatures, and wherein the pores comprise pores having a diameter of less than 700 nanometers, and preferably less than 70 nanometers, so that the coating exhibits at atmospheric pressure during an increase in ambient temperature a drop in its thermal conductivity.

2. Use according to claim 1, wherein the coating is of fire-retardant material.

3. Use according to any one of claims 1 or 2, wherein the porous structure comprises clusterings of particles having a size within a range of 2 to 300 nanometers.

4. Use according to any one of claims 1-3, wherein the coating is salt water resistant.

5. Use according to any one of claims 1-4, wherein the coating itself is impermeable to gas when a pressure difference of 30 m Bar is set between the first side and the second side.

6. Use according to any one of claims 1-5, wherein the coating is impermeable to water.

## Patentansprüche

1. Verwendung einer Hülse (10) oder Schale um ein Rohr (12) in einem Leitungskanal (14) als mindestens Teil eines passiven feuerbeständigen Dichtungssystems, wobei die Hülse oder Schale mindestens eine erste Seite und eine zweite Seite aufweist, um zu verhindern, dass Wärme, die auf der ersten Seite vorhanden ist, auf die zweite Seite übertragen wird, wobei die Hülse oder Schale expandiertes Vermikulit und eine Verstärkungsstruktur zum Verbessern einer Festigkeit der Hülse oder Schale umfasst, wobei die Verstärkungsstruktur eine Beschichtung ist, die auf allen Seiten der Hülse oder Schale aufgebracht ist, und wobei die Beschichtung eine anorganische Beschichtung aus einem wärmeisolierenden Material ist, wobei die Beschichtung eine poröse Struktur aufweist oder bei erhöhten Temperaturen Poren ausbildet und wobei die Poren Poren mit einem Durchmesser von weniger als 700 Nanometer und vorzugsweise von weniger als 70 Nanometer umfassen, so dass die Beschichtung bei Atmosphärendruck während eines Anstiegs der Umgebungstemperatur einen Abfall ihrer Wärmeleitfähigkeit aufweist.

2. Verwendung nach Anspruch 1, wobei die Beschichtung aus feuerhemmendem Material ist.

3. Verwendung nach einem der Ansprüche 1 oder 2, wobei die poröse Struktur Cluster von Partikeln mit einer Größe innerhalb eines Bereichs von 2 bis 300 Nanometer umfasst.

4. Verwendung nach einem der Ansprüche 1 bis 3, wobei die Beschichtung salzwasserbeständig ist.

5. Verwendung nach einem der Ansprüche 1 bis 4, wobei die Beschichtung selbst gasundurchlässig ist, wenn eine Druckdifferenz von 30 mbar zwischen der ersten Seite und der zweiten Seite eingestellt ist.

6. Verwendung nach einem der Ansprüche 1 bis 5, wobei die Beschichtung wasserundurchlässig ist.

## Revendications

1. Utilisation d'un manchon (10) ou d'une enveloppe autour d'un tuyau (12) dans un conduit (14) comme au moins une partie d'un système d'étanchéité passif résistant au feu, le manchon ou l'enveloppe ayant au moins un premier côté et un deuxième côté pour empêcher la chaleur présente sur le premier côté d'être transférée au deuxième côté, le manchon ou l'enveloppe comprenant de la vermiculite expansée et une structure de renforcement pour améliorer la résistance du manchon ou de l'enveloppe, la structure de renforcement étant un revêtement appliqué sur tous les côtés du manchon ou de l'enveloppe et le revêtement étant un revêtement inorganique d'un matériau isolant thermique, le revêtement ayant une structure poreuse ou formant des pores à haute température, et les pores comprenant des pores ayant un diamètre inférieur à 700 nanomètres, et de préférence inférieur à 70 nanomètres, de sorte que le revêtement présente à la pression atmosphérique lors d'une augmentation de la température ambiante une chute de sa conductivité thermique.

2. Utilisation selon la revendication 1, dans laquelle le revêtement est dans un matériau ignifuge.

3. Utilisation selon l'une quelconque des revendications 1 et 2, dans laquelle la structure poreuse comprend des amas de particules ayant une taille comprise entre 2 et 300 nanomètres.

4. Utilisation selon l'une quelconque des revendications 1 à 3, dans laquelle le revêtement est résistant à l'eau salée.

5. Utilisation selon l'une quelconque des revendications 1 à 4, dans laquelle le revêtement lui-même est imperméable aux gaz lorsqu'une différence de pression de 30 mbar est établie entre le premier côté et le deuxième côté.

6. Utilisation selon l'une quelconque des revendications 1 à 5, dans laquelle le revêtement est imperméable à l'eau.
